(19) Europäisches Patentamt
European Patent Office
Office européen des brevets

(11) **EP 3 650 905 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(51) Internationale Patentklassifikation (IPC):
**G02B 21/00** (2006.01)     **G02B 21/36** (2006.01)
**G02B 27/58** (2006.01)     **G06T 3/40** (2006.01)

(21) Anmeldenummer: **19205973.1**

(22) Anmeldetag: **29.10.2019**

(52) Gemeinsame Patentklassifikation (CPC):
**G02B 21/367; G02B 21/0032; G02B 21/008; G02B 27/58**

(54) **BESCHLEUNIGTE VERFAHREN UND VORRICHTUNGEN FÜR DIE DREIDIMENSIONALE MIKROSKOPIE MIT STRUKTURIERTER BELEUCHTUNG**

IMPROVED METHOD AND DEVICES FOR MICROSCOPY WITH STRUCTURED ILLUMINATION

PROCÉDÉS ET DISPOSITIFS ACCÉLÉRÉS POUR UNE MICROSCOPIE TRIDIMENSIONNELLE À ÉCLAIRAGE STRUCTURÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2018 DE 102018009056**

(43) Veröffentlichungstag der Anmeldung:
**13.05.2020 Patentblatt 2020/20**

(73) Patentinhaber: **Carl Zeiss Microscopy GmbH 07745 Jena (DE)**

(72) Erfinder:
• **Kleppe, Ingo**
  **07749 Jena (DE)**
• **Novikau, Yauheni**
  **99510 Apolda (DE)**

(74) Vertreter: **Schiffer, Axel Martin**
**Rundfunkplatz 2**
**80335 München (DE)**

(56) Entgegenhaltungen:
WO-A1-2010/015954     WO-A1-2012/118436
DE-A1-102011 077 269     US-A1- 2012 194 646

EP 3 650 905 B1

**EP 3 650 905 B1**

**Beschreibung**

Die Erfindung betrifft Verfahren und Vorrichtungen zur Abbildung einer Probe mittels eines Mikroskops, wobei mittels des Mikroskops eine Fokalebene der Probe fokussiert wird und diese Fokalebene in mehreren Phasen sequentiell mit strukturiertem Beleuchtungslicht beleuchtet und das von der Probe emittierte und/oder gestreute Probenlicht pro Phase mittels eines Detektors in ein jeweiliges (strukturiertes) Einzelbild aufgenommen wird, so dass aus den Einzelbildern ein Ergebnisbild mit (gegenüber den Einzelbildern) erhöhter Auflösung rekonstruierbar ist. Strukturiert bedeutet dabei, dass das Beleuchtungslicht in der Probe mindestens eine Komponente mit konstanter Ortsfrequenz aufweist.

Das Auflösungsvermögen von Mikroskopen ist aufgrund der Beugung des von der Probe aufgenommen Lichts im Mikroskopobjektiv von dessen Apertur und von der Wellenlänge des Lichts abhängig. Da der verwendbare Wellenlängenbereich des sichtbaren Lichts endlich ist, ist das Auflösungsvermögen eines Mikroskops grundsätzlich begrenzt (Abbe 1873). Bezogen auf die abzubildenden Ortsfrequenzen der Probe bedeutet das, dass der Träger (engl. "support") der optischen Übertragungsfunktion (engl. "optical transfer function"; OTF) des Mikroskops im Frequenzraum auf einen endlichen Bereich um den Koordinatenursprung begrenzt ist. In der Folge kann das Mikroskop nur solche Ortsfrequenzen abbilden, die in dem zentralen Intervall liegen, in dem der Träger nicht verschwindet.

Durch eine strukturierte Beleuchtung der Probe (engl. "structured illumination microscopy"; SIM) kann das Auflösungsvermögen lateral etwa um einen Faktor zwei verbessert werden, wenn die Anregungsintensität der Beleuchtung und die Emissionsintensität der Probe linear zusammenhängen. Die SIM ist beispielsweise in DE 199 08 883 A1 und in dem Aufsatz "Surpassing the lateral resolution limit by a factor of two using structured illumination microscopy" von M. Gustafsson (Journal of Microscopy, Band 198, 2000, S. 82) offenbart. Sie beruht auf der Erzeugung einer räumlichen Lichtstruktur auf der zu untersuchenden Probe, beispielsweise durch sinusförmige Interferenz des Beleuchtungslichts hinter einem optischen Gitter. Aufgrund der Faltung der Probenantwort mit der Punktbildfunktion (engl. "pointspread function"; PSF) des Mikroskopobjektivs im Ortsraum wird im Frequenzraum ein Bereich von Ortsfrequenzen der Probenstruktur, die außerhalb des Trägers der OTF liegen, in das zentrale Trägerintervall verschoben, wo sie die dortigen ursprünglichen Ortsfrequenzintensitäten überlagern. Die Lichtstruktur wird sequentiell in mehreren unterschiedlichen Phasenlagen erzeugt und in jeder Phasenlage jeweils ein Einzelbild aufgenommen.

Aus einem Satz solcher Einzelbilder, die die Überlagerungen der verschobenen und der ursprünglichen Ortsfrequenzen enthalten, kann gemäß der SIM-Methode durch Lösen eines die Wechselwirkungen beschreibenden Gleichungssystems ein konsistentes Ergebnisbild rekonstruiert werden, das sowohl die ursprünglichen Ortsfrequenzen des Trägerintervalls als auch die ursprünglichen höheren, durch die strukturierte Beleuchtung zwischenzeitlich in das Trägerintervall verschobenen Ortsfrequenzen enthält. Dadurch hat das Ergebnisbild eine höhere laterale Auflösung als eine konventionelle Einfachaufnahme mit gleichförmiger Beleuchtung. Diese Auflösung wird als Superauflösung bezeichnet, wenn sie feiner als das beugungsbegrenzte Auflösungsvermögen ist. Jedoch erfordert die mehrfache Aufnahme mit verschiedenen Phasenlagen und Orientierungen der Strukturierung eine hohe Stabilität der optischen Anordnung und der Probe während der gesamten Messdauer. Zudem reduziert die notwendige Anzahl der Einzelbilder die effektive Bildwiederholfrequenz.

Neben der Verbesserung des lateralen Auflösungsvermögens (quer zur optischen Achse der Detektion) kann die SIM auch genutzt werden, um aus einem Satz von Einzelbildern einer Fokalebene einen optischen Schnitt (engl. "optical section") durch die Probe mit verbesserter axialer Auflösung (längs der optischen Achse der Detektion) zu erzeugen (sog. OS-SIM). Das Ergebnisbild ist dann ein quasikonfokales, auch das axiale Auflösungsvermögen entspricht etwa dem eines konfokalen Mikroskops. Wird eine Anzahl N von Fokalebenen jeweils ein Satz strukturiert beleuchteter Bilder aufgenommen, kann daraus ein z-Stapel quasi-konfokaler Ergebnisbilder rekonstruiert werden.

Die SIM kann aber auch so auf mehrere Fokalebenen erweitert werden, so dass auch axial Superauflösung erreicht werden kann (sog. 3D-SIM). Zu diesem Zweck muss die Beleuchtung in der Probe auch axial strukturiert sein und es wird für jede von N Fokalebenen ein eigener Satz Einzelbilder aus der betreffenden Fokalebene aufgenommen. Aus einem Gleichungssystem, welches die Wechselwirkungen in allen N Fokalebenen beschreibt, kann ein z-Stapel aus N axial, insbesondere auch lateral, superaufgelösten Ergebnisbildern errechnet werden. Um einen vollständigen z-Stapel zu erhalten, dürfen die Fokalebenen wegen des Nyquist-Shannon-Abtasttheorems höchstens um die Hälfte einer minimalen durch das Mikroskop axial optisch auflösbaren Distanz (also entsprechend einer gegenüber dem optischen Auflösungvermögen doppelt so feinen axialen Auflösung) voneinander beabstandet sein, beispielsweise also etwa 110 nm für ein hochaperturiges Objektiv mit NA=1,4.

Eine über SIM hinausgehende Verbesserung des Auflösungsvermögens kann erzielt werden, indem eine Anregung der Probe (mittels Beleuchtung oder auf andere Weise) derart erfolgt, dass ein nichtlinearer Zusammenhang zwischen der Anregungsintensität und der von der Probe emittierten Lichtintensität entsteht ("saturated pattern excitation microscopy"; SPEM). Auch die SPEM ist beispielsweise in DE 199 08 883 A1 offenbart. Im Fall der Fluoreszenzmikroskopie gelingt eine nichtlineare Anregung beispielsweise durch eine hohe Beleuchtungsintensität, die im Bereich der Beleuchtungsstruktur zu einer teilweisen Sättigung der Anregung des Fluoreszenzfarbstoffs führt. Dadurch werden noch höhere Ortsfrequenzen von Objektstrukturen in das Intervall des Trägers der OTF verschoben als bei der SIM. Durch Berücksichtigung der nichtlinearen Wechselwirkung in dem zu lösenden Gleichungssystem können auch diese höheren Frequenzen rekonstruiert werden. Allerdings sind bei SPEM kleinere Phasenschritte und damit noch mehr Einzelbilder als bei SIM erforderlich. Auch SPEM kann in drei Dimensionen durchgeführt werden.

In WO 2012/118436 A1 sind Vorrichtungen und Verfahren zur Mikroskopie mit strukturierter Beleuchtung (SIM) beschrieben.

US 2012/194646 A1 offenbart ein Verfahren zum Verbessern der durch konfokale Mikroskopie bereitgestellten räumlichen Information. Dabei werden dreidimensionale Bilder bei verschiedenen Winkeln aufgenommen und in einem Interpolationsverfahren verrechnet.

Der Erfindung liegt die Aufgabe zugrunde, ein die Verfahren und Mikroskope der eingangs genannten Art zu verbessern, so dass die Messdauer verkürzt und die Probenbelastung verringert werden kann.

Die Aufgabe wird gelöst durch ein Verfahren, welches die in Anspruch 1 angegebenen Merkmale aufweist, und durch ein Mikroskop, welches die in Anspruch 17 angegebenen Merkmale aufweist.

Vorteilhafte Ausgestaltungen der Erfindung sind in den Unteransprüchen angegeben.

Erfindungsgemäß ist vorgesehen, dass mittels des Mikroskops eine zweite, von der ersten Fokalebene verschiedene Fokalebene fokussiert wird und auch für diese zweite Fokalebene Einzelbilder in unterschiedlichen Beleuchtungs-Phasen aufgenommen werden und dass aus den Einzelbildern der zwei Fokalebenen ein Ergebnisbild rekonstruiert wird, welches eine zwischen diesen Fokalebenen liegende Probenebene darstellt. Von dieser zusätzlichen Probenebene werden jedoch keine Einzelbilder aufgenommen (diese zusätzliche Probenebene wird nicht fokussiert) oder es werden jedenfalls keine Einzelbilder, bei deren Aufnahme diese zusätzliche Probenebene fokussiert wird, bei der Rekonstruktion des Ergebnisbilds verwendet.

Verschiedenen Fokalebenen können beispielsweise durch Verfahren der Probe in z-Richtung, durch Bewegen des Objektivs in z-Richtung oder gegebenenfalls durch Verstellung einer Innenfokussierung des Objektivs fokussiert werden.

Dass Prinzip der Erfindung liegt darin, dass anhand der (vorgegebenen, gemessenen, berechneten oder geschätzten) Punktbildfunktion aus einem Satz von unter strukturierter Beleuchtung aus einer einzelnen Fokalebene aufgenommenen Einzelbildern auch Informationen über *andere* Ebenen (also Intensitäten aus diesen anderen Ebenen) als die Fokalebene ermittelt werden können, da ein Mikroskop aufgrund seiner endlichen Tiefenschärfe auch andere Probenebenen als die momentane Fokalebene erfasst. Diese anderen Probenebenen werden zwar nicht scharf abgebildet, gerade darin liegt jedoch eine verwertbare Tiefeninformation. Diese Tiefeninformation wird bei der OS-SIM zur Diskriminierung von außerfokalem Licht genutzt. Die von außerhalb der Fokalebene detektierte Intensität geht dabei jedoch ungenutzt verloren.

Sie kann stattdessen vorteilhafterweise zur Errechnung eines Bildes einer außerfokalen Probenebene verwendet werden. Es ist bei einer üblicherweise zur Fokalebene spiegelsymmetrischen (und üblicherweise um die optische Achse der Detektion rotationssymmetrischen) PSF lediglich notwendig, die sich aus der Spiegelsymmetrie ergebende Zweideutigkeit der Tiefeninformation aufzulösen. Dies gelingt, indem Tiefeninformationen aus zwei verschiedenen Fokalebenen verwendet werden, um eine dazwischenliegende Probenebene zu rekonstruieren.

Erfindungsgemäß wurde erkannt, dass das aus der 3D-SIM (oder auch 3D-SPEM) bekannte Gleichungssystem genutzt werden kann, um ein Ergebnisbild von einer solchen zusätzlichen Probenebenen zu rekonstruieren, obwohl für diese zusätzliche Probenebene keine Einzelbilder aufgenommen wurden.

So kann vorteilhafterweise die Zahl der zur Aufnahme eines z-Stapels notwendigen Fokalebenen verringert werden, indem die Abstände der Fokalebenen größer als die Hälfte einer minimalen durch das Mikroskop optisch auflösbaren axialen Distanz (also entsprechend einer gegenüber dem optischen Auflösungvermögen weniger als doppelt so feinen axialen Auflösung) gewählt werden und dadurch zunächst formal das Nyquist-Shannon-Abtasttheorem verletzt wird. Indem die zusätzlichen (nicht fokussierten) Probenebenen in eine näherungsweise Auswertung einbezogen werden, ist das Nyquist-Shannon-Abtasttheorem effektiv erfüllt. Die zusätzlichen Probenebenen können als "scheinbare" Fokalebenen angesehen und im SIM-Gleichungssystem wie Fokalebenen beschrieben werden. Beispielsweise können die aufgenommenen Fokalebenen durch die Erfindung axial etwa 330 nm voneinander beabstandet sein, dennoch können vollständige Ergebnisbilder von Ebenen mit einem axialen Abstand von nur ca. 110 nm errechnet werden. Da für jede der nur rechnerisch aufgenommenen zusätzlichen Probenebenen (scheinbare Fokalebenen) jeweils eine "echte" Fokalebene ausgelassen werden kann, entfällt die Aufnahme von Einzelbildern in einer entsprechend vielfachen Anzahl Beleuchtungs-Phasen. So wird die Messdauer signifikant verkürzt und in demselben Maße die Probe geschont, da diese weniger oft und damit insgesamt weniger lang beleuchtet werden muss.

Vorzugsweise sind die beiden Fokalebenen, zwischen denen sich die zusätzliche Probenebene befindet, höchstens soweit voneinander beabstandet, dass sich die durch die Schärfentiefe des Mikroskops bestimmten, in den Einzelbildern aufgenommenen Tiefenbereiche längs der optischen Achse überlappen. Mit anderen Worten sind die beiden Fokalebenen, zwischen denen sich die zusätzliche Probenebene befindet, erfindungsgemäß weniger als eine minimale durch das Mikroskop optisch auflösbare axiale Distanz voneinander entfernt (also entsprechend einer gegenüber dem optischen Auflösungvermögen feineren axialen Auflösung), erfindungsgemäß jedoch weiter als die Hälfte der minimalen optisch auflösbaren Distanz wie oben beschrieben. Diese Abstandsbedingungen können näherungsweise auch durch die Abmessungen der PSF ausgedrückt werden: Der Abstand zwischen den Fokalebenen, zwischen denen sich die zusätzliche Probenebene befindet, wird vorzugsweise so gewählt, dass er größer als eine Halbwertsbreite (FWHM) der PSF in axialer Richtung ist. Der Abstand zwischen den Fokalebenen, zwischen denen sich die zusätzliche Probenebene befindet, wird vorzugsweise so gewählt, dass er kleiner als zwei Halbwertsbreiten der PSF in axialer Richtung ist.

Erfindungsgemäß wird mindestens eine Lösung eines die Wechselwirkung der Lichtstruktur mit optischen Eigenschaften der Probe und mit der Punktbildfunktion des Mikroskops sowohl in den Fokalebenen als auch in der zwischen den Fokalebenen liegenden Probenebene beschreibenden Gleichungssystems näherungsweise ermittelt. Insbesondere kann das folgende oder ein mathematisch äquivalentes Gleichungssystems verwendet werden:

$$IS_{em}^f(k_x, k_y, k_z) =$$

$$\sum_k \int dk_x' dk_y' dk_z' I^f(k_x', k_y', k_z') S^f\left(k_x - k_x', k_y - k_y', k_z - \frac{k}{\Delta z}\right) H^f\left(k_x, k_y, k_z - \frac{k}{\Delta z} - k_z'\right).$$

Besonders vorteilhaft sind Ausführungsformen, in denen zum näherungsweisen Lösen eine lineare Regression, insbesondere eine Regularisierung, verwendet wird, insbesondere eine abgeschnitte Singulärwertzerlegung, in welcher nur eine echte Untermenge aller Singulärwerte ermittelt wird.

Die Genauigkeit der Näherung kann verbessert werden, indem die Einzelbilder lateral optisch überabgetastet, insbesondere mit einer gegenüber dem optischen Auflösungsvermögen des optischen Systems des Mikroskops doppelt so feinen Auflösung, aufgenommen werden. Dazu kann das folgende oder ein mathematisch äquivalentes Gleichungssystems verwendet werden:

$$IS_{em}^f\left(k_x - \frac{i}{\Delta x}, k_y - \frac{j}{\Delta y}, k_z\right) =$$

$$\sum_k \int \begin{aligned} dk_x' dk_y' dk_z' I^f(k_x', k_y', k_z') S^f\left(k_x - k_x', k_y - k_y', k_z - \frac{k}{\Delta z}\right) \\ \times H^f\left(k_x - \frac{i}{\Delta x}, k_y - \frac{j}{\Delta y}, k_z - \frac{k}{\Delta z} - k_z'\right) \end{aligned}.$$

Vorzugsweise erfolgt die strukturierte Beleuchtung derart, dass die in der Probe erzeugte Lichtstruktur regelmäßig strukturiert ist, insbesondere mit lateraler Periodizität und/oder axialer Periodizität, wobei sie insbesondere in jeder der Beleuchtungs-Phasen an einer andere Position und/oder in einer anderen Orientierung angeordnet wird.

In besonders vorteilhaften Ausführungsformen kann das Ergebnisbild, welches die zwischen den Fokalebenen liegende zusätzliche Probenebene darstellt, mit gegenüber den Einzelbildern der Fokalebene erhöhter lateraler und/oder axialer Auflösung rekonstruiert werden. Es ist jedoch nicht zwingend notwendig, Superauflösung zu erreichen. Es können beispielsweise auch nur optische Schnitte der Fokalebenen und der zusätzlichen Probenebene(n) mit quasi-konfokaler Auflösung wie bei der OS-SIM erstellt werden.

Gleichwertig zur Lösung eines Gleichungssystems ist es, die Einzelbilder anhand eines Modells einer Punktbildfunktion des Mikroskops näherungsweise zu entfalten, insbesondere nach einem rechnerischen Trennen der Beleuchtungs-Phasen.

Die Rekonstruktion einer zusätzlichen Ebene, die nicht fokussiert wird, gelingt entsprechend, indem bei dem Entfalten ein (Intensitäts-)Anteil eines der Einzelbilder, insbesondere genau eines Pixels, unterschiedlichen Ergebnisbildern zugeordnet wird. Vorzugsweise wird bei dem Entfalten ein (Intensitäts-)Anteil eines der Einzelbilder, insbesondere genau eines Pixels, teilweise mindestens einem der Ergebnisbilder, welches eine der Fokalebenen darstellt, und teilweise dem Ergebnisbild, welches die zwischen den Fokalebenen liegende Probenebene darstellt, zugeordnet. Insbesondere kann das Zuordnen zu dem Ergebnisbild, welches die zwischen den Fokalebenen liegende Probenebene darstellt, anhand von Intensitäten von Einzelbildern mindestens der beiden nächstliegenden Fokalebenen erfolgen.

Zweckmäßigerweise wird zur Aufnahme der Einzelbilder ein zweidimensional ortsauflösender Detektor verwendet, wobei insbesondere keine die Probe optisch schneidende Blende vor dem Detektor angeordnet wird. Damit gelingt eine schnelle Aufnahme der Einzelbilder. Alternativ ist eine konfokale, abtastende Detektion möglich.

Besonders bevorzugt sind Ausführungsformen, in denen die Punktbildfunktion des Mikroskops nicht zum Erzeugen einer axialen Asymmetrie manipuliert wird. Damit wird der gerätetechnische Aufwand geringgehalten. Insbesondere kann so auf eine aufwendige und kostenintensive Phasenmaske verzichtet werden.

Ebenfalls besonders bevorzugt sind Ausführungsformen, in denen während der Aufnahme jedes der Einzelbilder nur genau eine Fokalebene fokussiert wird. Auf diese Weise kann auf aufwendige Optiken zur simultanen Abbildung mehrerer Fokalebenen verzichtet werden.

Die Erfindung umfasst auch ein Mikroskop mit einer Steuereinheit, die zur Durchführung eines der oben beschriebenen Verfahren eingerichtet. Ist. Außerdem weist das Mikroskop eine Lichtquelle, Mittel zum Fokussieren unterschiedlicher Fokalebenen in einer Probe (beispielsweise ein verstellbares Objektiv, einen verfahrbaren Probentisch oder einen Wellenfrontmanipulator im Detektionsstrahlengang), einen zweidimensional ortsauflösenden Detektor zur Aufnahme von Einzelbildern aus der momentanen Fokalebene einen und Mittel zur Erzeugung von strukturiertem Beleuchtungslicht in der Probe auf, beispielsweise ein Beugungsgitter, einen räumlichen Lichtmodulator (engl. "spatial light modulator"; SLM), ein Mikrospiegel-Array (DMD) oder Lichtleiter, die in einer rückwärtigen Brennebene des Mikroskopobjektivs ein Muster bereitstellen, welches in der Probe zu einer Lichtstruktur interferiert. Es ist auch möglich, das die Mittel zur Erzeugung von strukturiertem Beleuchtungslicht in der Lichtquelle realisiert sind, beispielsweise in Form eines Leuchtdioden-Arrays.

Soweit Verfahrensschritte beschrieben werden, kann die Steuereinheit des Mikroskops zur Ausführung dieser Verfahrensschritte eingerichtet werden.

Die Erfindung kann mit fluoreszierenden oder nicht fluoreszierenden Proben realisiert werden. Im Fall einer fluoreszierenden Probe ist die Lichtquelle zweckmäßigerweise zur Anregung des in der Probe bereitgestellten Fluoreszenzfarbstoffs ausgebildet. Vorzugsweise umfasst die Lichtquelle einen oder mehrere Laser, insbesondere auch einen einstellbaren Intensitätsmodulator, um eine breite Variation der Anregungsintensität zu ermöglichen.

Nachfolgend wird die Erfindung anhand von Ausführungsbeispielen näher erläutert.

In den Zeichnungen zeigen:

Fig. 1 ein Mikroskop,

Fig. 2 das Prinzip der strukturierten Beleuchtung in mehreren Phasen,

Fig. 3 einen Stapel aufzunehmener Fokalebenen und zusätzlicher Probenebenen,

Fig. 4 eine Beleuchtung mit drei interferierenden Ordnungen und

Fig. 5 eine Beleuchtung mit fünf interferierenden Ordnungen.

In allen Zeichnungen tragen übereinstimmende Teile gleiche Bezugszeichen.

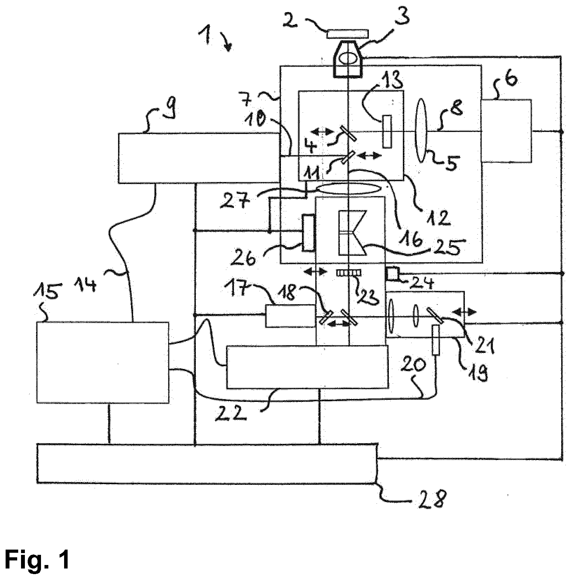

**Fig. 1** zeigt ein Mikroskop 1, das sowohl klassische Mikroskopieverfahren, d. h. Mikroskopieverfahren, deren Auflösung beugungsbegrenzt ist, als auch superauflösende Mikroskopieverfahren, d. h. mit Mikroskopieverfahren, deren Auflösung über die Beugungsgrenze hinaus gesteigert ist, ausführen kann.

Das Mikroskop 1 erfasst eine Probe 2. Dazu weist es ein Objektiv 3 auf, durch das die Strahlung für alle Mikroskopieverfahren läuft.

Das Objektiv 3 bildet über einen Strahlteiler 4 die Probe zusammen mit einer Tubuslinse 5 auf einen CCD-Detektor 6 ab, der im Beispiel ein allgemein möglichen Flächendetektor ist. Insofern verfügt das Mikroskop 1 über ein herkömmliches Lichtmikroskopmodul 7 und der Strahlengang von der Probe 2 durch das Objektiv 3 und die Tubuslinse 5 zum CCD-Detektor 6 entspricht einem herkömmlichen Weitfeld-Detektionsstrahlengang 8. Der Strahlteiler 4 ist, wie durch den Doppelpfeil in Fig. 1 angedeutet, austauschbar, um zwischen Strahlteilern mit verschiedenen dichroitischen Eigenschaften bzw. achromatischen Strahlteilern gemäß US 2008/0088920 wechseln zu können.

In den Strahlengang zum Objektiv 3 ist weiter ein Laser-Scanning-Modul 9 angebunden, dessen LSM-Beleuchtungs- und Detektionsstrahlengang über einen Schaltspiegel 11, der ebenfalls Strahlteilerfunktionen hat, in den Strahlengang zum Objektiv 3 eingekoppelt ist. Der Strahlengang vom Schaltspiegel 11 zum Objektiv 3 durch den Strahlteiler 4 ist also ein Strahlengang, in dem Beleuchtungsstrahlengang und Detektionsstrahlengang vereint sind. Dies gilt sowohl hinsichtlich des Laser-Scanning-Moduls 9 also auch hinsichtlich des Weitfeld-Detektionsstrahlengangs 8, da, wie noch zu erläutern sein wird, am Schaltspiegel 11 auch Beleuchtungsstrahlung eingekoppelt wird, die zusammen mit dem Weitfeld-Detektionsstrahlengang 8, d. h. dem CCD-Detektor 6 Mikroskopieverfahren realisiert.

Der Schaltspiegel 11 und der Strahlteiler 4 sind zu einem Strahlteilermodul 12 zusammengefasst, wodurch die Möglichkeit besteht, den Schaltspiegel 11 und den Strahlteiler 4 anwendungsabhängig zu wechseln. Dies ist auch durch Doppelpfeile veranschaulicht. Weiter im Strahlteilermodul 12 ist ein Emissionsfilter 13 vorgesehen, das im Weitfeld-Detektionsstrahlengang 8 liegt und die spektralen Anteile, welche durch den Weitfeld-Detektionsstrahlengang 8 propagieren können, geeignet filtert. Natürlich ist auch das Emissionsfilter 13 im Strahlteilermodul 12 austauschbar.

Das Laser-Scanning-Modul 9 erhält für den Betrieb erforderliche Laserstrahlung über eine Lichtleitfaser 14 von einem Lasermodul 15.

In der in Fig. 1 dargestellten Bauweise wird am Strahlteilermodul 12, genauer am Schaltspiegel 14, ein Sammel-Beleuchtungsstrahlengang 16 eingekoppelt, durch den Beleuchtungsstrahlung für verschiedene Mikroskopieverfahren läuft. In diesen Sammel-Beleuchtungsstrahlengang 16 sind verschiedene Beleuchtungsstrahlengänge einzelner Beleuchtungsmodule eingekoppelt.

Beispielsweise koppelt ein Weitfeldbeleuchtungsmodul 17 über einen Schaltspiegel 18 Weitfeldbeleuchtungsstrahlung in den Sammel-Beleuchtungsstrahlengang 16, so dass über eine Tubuslinse 27 und das Objektiv 3 die Probe 2 weitfeldbeleuchtet wird. Das Weitfeldbeleuchtungsmodul 17 kann beispielsweise eine HBO-Lampe aufweisen. Als weiteres Beleuchtungsmodul ist ein TIRF-Beleuchtungsmodul 19 vorgesehen, das bei geeigneter Stellung des Schaltspiegels 18 eine TIRF-Beleuchtung realisiert. Das TIRF-Beleuchtungsmodul 19 erhält dazu Strahlung von Lasermodul 15 über eine Lichtleitfaser 20. Das TIRF-Beleuchtungsmodul 19 weist einen Spiegel 21 auf, der längsverschieblich ist. Durch die Längsverschiebung wird der Beleuchtungsstrahl, der vom TIRF-Beleuchtungsmodul 19 abgegeben wird, senkrecht zur Hauptausbreitungsrichtung des abgegebenen Beleuchtungsstrahls verschoben, wodurch im Ergebnis am Objektiv 3 die TIRF-Beleuchtung unter einem einstellbaren Winkel zur optischen Achse des Objektivs einfällt. Auf diese Weise kann einfach der nötige Winkel der Totalreflexion am Deckglas sichergestellt werden. Natürlich sind auch andere Mittel geeignet, um diese Winkelverstellung zu bewirken.

Weiter ist an dem Sammel-Beleuchtungsstrahlengang der Beleuchtungsstrahlengang eines Manipulatormoduls 22 angekoppelt, das ebenfalls über eine nicht näher bezeichnete Lichtleitfaser Strahlung vom Lasermodul 15 erhält und eine punkt- oder linienförmige Strahlverteilung scannend über die Probe 2 führt. Das Manipulatormodul 22 entsprechend also im wesentlichen dem Beleuchtungsmodul eines Laserscanningmikroskops, und demzufolge kann das Manipulatormodul 22 auch mit dem Detektor des Laser-Scanning-Moduls 9 oder der Weitfeld-Detektion des CCD-Detektors 6 kombiniert betrieben werden.

Im Sammel-Beleuchtungsstrahlengang 16 ist weiter ein Gitter 23 vorgesehen, dessen Gitterkonstante unterhalb der Grenzfrequenz liegt, die mit dem Mikroskop 1 in die Probe 2 übertragen werden kann. Das Gitter 23 kann beispielsweise in einem aur die Probe abgebildeten Ebene (Zwischenbild der Probe) des Beleuchtungsstrahlengangs 16 angeordnet sein. Das Gitter 23 ist quer zur optischen Achse des Sammel-Beleuchtungsstrahlengangs 16 verschieblich. Hierzu ist ein entsprechender Verschiebeantrieb 24 vorgesehen.

In Beleuchtungsrichtung dem Gitter nachgeordnet sitzt im Sammel-Beleuchtungsstrahlengang 16 weiter ein Bildfeldrotator 25, der von einem Rotatorantrieb 26 gedreht wird. Bei dem Bildfeldrotator kann es sich beispielsweise um ein Abbe-König-Prisma handeln.

Die Module und Antriebe sowie Detektoren des Mikroskops 1 sind alle über nicht näher bezeichnete Leitungen mit einer Steuereinrichtung 28 verbunden. Diese Verbindung kann beispielsweise über einen Daten- und Steuerbus erfolgen. Die Steuereinrichtung 28 steuert das Mikroskop 1 in verschiedenen Betriebsmodi.

Das Steuergerät 28 erlaubt es somit, am Mikroskop 1 klassische Mikroskopie, d. h. Weitfeldmikroskopie (WF), Laserscanningmikroskopie (LSM) und auch Fluoreszenzmikroskopie mit totaler interner Reflexion (TIRF) auszuführen.

Das Mikroskop der Fig. 1 weist im wesentlichen zwei zum Laserscannerbeleuchten geeignete Module auf, nämlich das Laserscanningmodul 9 sowie das Manipulatormodul 22. Natürlich sind auch andere Kombinationen möglich. Diese Module sind über Tubuslinsen mit dem Objektiv 3 auf die Probe 2 gekoppelt. Das Manipulatormodul 22 beinhaltet lediglich den Anregungsteil eines Laserscanningmoduls, ohne Detektion. Dadurch kann die Probe punktförmig beleuchtet und der Beleuchtungsspot über die Probe 2 gerastert werden.

Vorzugsweise befindet sich im Manipulatormodul 22 auch eine Umschalteinheit, z. B. eine Umschaltlinse oder Zylinderlinse, mit welcher eine Umschaltung zwischen einer punktförmigen und einer linienförmigen Beleuchtung erfolgt. Diese linienförmige Beleuchtung ist besonders dann vorteilhaft, wenn das Gitter 23 eingeschwenkt ist und senkrecht zur Linie der linienförmigen Beleuchtung liegt. Alternativ könnte die linienförmige Beleuchtung zur dynamischen (sequentiellen) Erzeugung einer strukturierten Beleuchtung in der Probe 2 verwendet werden.

Alternativ zum Gitter 23 kann auch ein variabel einstellbarer Streifenmodulator oder ein DMD oder ein SLM zur Erzeugung einer strukturierten Beleuchtung in der Probe 2 eingesetzt werden. Dann ist natürlich der Verschiebeantrieb 24 sowie die Ein- und Ausschwenkbarkeit des Gitters 23 nicht mehr erforderlich.

Der Bildfeldrotator 25 erlaubt es, die strukturierte Beleuchtung, die durch das Gitter 23 (oder die dieses ersetzende Elemente) erzeugt werden, um die optische Achse des Sammel-Beleuchtungsstrahlenganges 16 zu drehen, so dass die strukturierte Beleuchtung in verschiedenen Winkeln in der Probe 2 liegt.

Zur Umschaltung zwischen einzelnen Betriebsarten werden die Schaltspiegel 18 und 11 sowie der Strahlteiler 4 geeignet eingestellt. Hierzu können in der Realisierung Klapp- oder Einschenkspiegel verwendet werden, so daß eine Umschaltung zwischen den Betriebsarten sequentiell erfolgen kann. Alternativ sind auch dichroitische Spiegel möglich, welche einen gleichzeitigen Betrieb der verschiedenen Module ermöglichen.

Der Strahlteiler 4 ist vorzugsweise als dichroitischer Strahlteiler ausgeführt, wobei die Spektraleigenschaften so einstellbar sind, daß Spektralanteile von Fluoreszenzemission von Markierungsmolekülen, die mit Hilfe des CCD-Detektors 6 detektiert werden sollen, in den Weitfeld-Detektionsstrahlengang 8 gelangen und die übrigen Spektralkomponenten möglichst transmittiert werden. Zur Erhöhung der Flexibilität bezüglich der Verwendbarkeit von Markierungsmolekülen mit verschiedenen Emissionscharakteristiken sind im Strahlteilermodul 12 mehrere verschiedene Strahlteiler 4 und Emissionsfilter 13 austauschbar angeordnet, z. B. auf einem Filterrad.

Das oben beschriebene Mikroskop kann dazu dienen, ein superaufgelöstes Ergebnisbild zu erzeugen. Dazu ist das Steuergerät 28 geeignet ausgebildet, beispielsweise durch eine geeignete Programmierung.

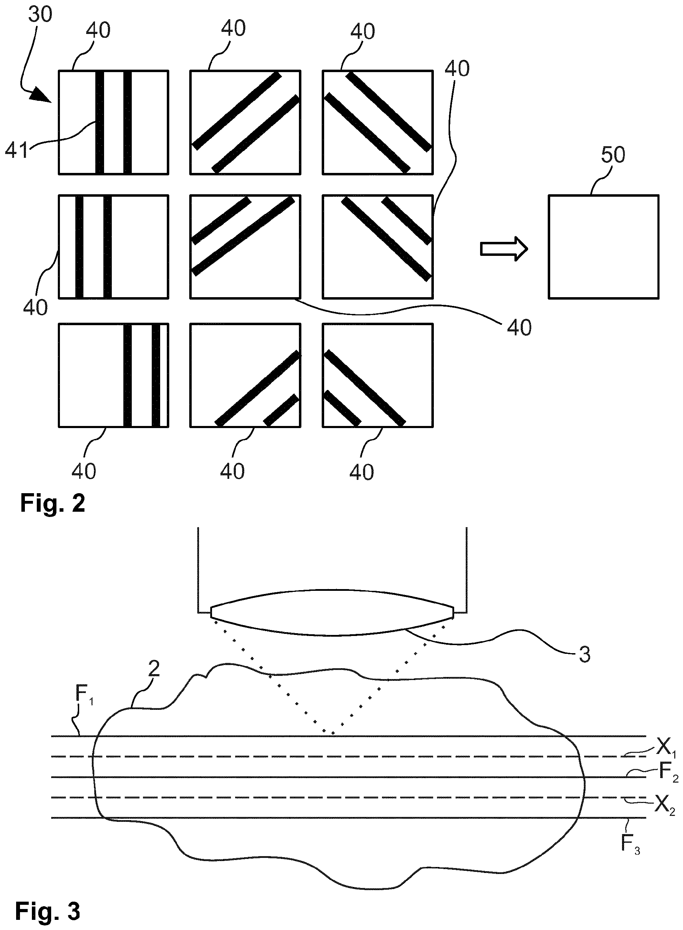

**Fig. 2** verdeutlicht schematisch das verwendete Konzept zur Erzeugung eines superaufgelösten Bildes in einer einzelnen Fokalebene gemäß der SIM-Methode. Die im Mikroskop 1 der Fig. 1 mikroskopierte Probe wird wiederholt weitfeld-abgebildet, wobei unterschiedliche Beleuchtungszustände eingestellt werden.

Fig. 2 zeigt einen Satz 30 von Einzelbildern 40 aus einer einzigen Fokalebene, die sich hinsichtlich einer enthaltenen Lichtstruktur 41 unterscheiden, die durch eine strukturierte Beleuchtung mittels des Beleuchtungsstrahlenganges 16 auf die Probe aufgebracht wird. Wie zu sehen ist, ist die beispielsweise mittels des Gitters 23 erzeugte laterale, beispielsweise periodische Lichtstruktur 41 in den verschiedenen Einzelbildern 40 unterschiedlich. Insgesamt liegen exemplarisch neun Einzelbilder 40 vor, die sich aus drei unterschiedlichen Orientierungen der Struktur 41 und drei unterschiedlichen Verschiebungslagen der Struktur 41 zusammensetzen. Die unterschiedlichen Orientierungen und Verschiebungslagen werden unter dem Begriff Phasen zusammengefasst. Es sind natürlich auch höhere Anzahlen unterschiedlicher Phasen möglich, wie dies aus den oben angegebenen Publikationen zum Prinzip der SIM bekannt ist.

Die gezeigte Struktur 41 ist jedoch rein exemplarisch zu verstehen. Insbesondere muß sie keine Linienstrukturierung sein. Auch können die schematisch eingezeichneten Linien längs der Linien noch weiter strukturiert sein. Gleichermaßen ist es möglich, anstelle der in den eingangs genannten SIM-Publikationen verwendeten linienartigen Strukturierung auch eine gescannte konfokale Punkt- oder Linien-Beleuchtung mit konfokaler Detektion einzusetzen, wie dies aus der Veröffentlichung "Image scanning microscopy" von C. Müller und J. Enderlein, Physical Review Letters, 104, 198101 (2010) bekannt ist. Dieses Prinzip wird als ISM bezeichnet. Natürlich liegen dann nicht neun Orientierungen einer strukturierten Beleuchtung vor, sondern eine geeignete Vielzahl an Einzelbildern, die aus dem Abscannen einer Probe gewonnen wurden. Jedes Einzelbild 40 entspricht dann einer bestimmten Scan-Lage, d. h. einem bestimmten Rasterzustand beim Abrastern des Bildes.

Die Steuereinheit 28 errechnet aus den aufgenommenen Einzelbildern 40 auf die nachfolgend beschriebene Weise ein superaufgelöstes Ergebnisbild 50.

Das Beleuchtungsmuster $I(x, y, z)$ wird durch die Wechselwirkung mit der Probe 2 mit deren optischen Eigenschaften $S(x, y, z)$ multipliziert, und mit der Detektions-PSF $H(x, y, z)$ gefaltet:

$$I_{em}(x,y,z,z_0) = \int dx'dy'dz'I(x',y',z')S(x',y',z_0-z')H(x-x',y-y',z+z')$$

$$(1),$$

wobei $Z_0$ die Verschiebung der Probe relative zum Talbot-Muster der strukturierten Beleuchtung und zur momentanten Fokalebene und $z$ die Position der momentanen Fokalebene angibt. Durch Setzen von $z = 0$, ergibt sich:

$$I_{em}(x,y,z_0) = \int dx'dy'dz'I(x',y',z')S(x',y',z_0-z')H(x-x',y-y',z')$$

$$(2)$$

Eine Fouriertransformation bezüglich x, y and z ergibt:

$$I_{em}^f(k_x,k_y,k_z) = \int dk_x'dk_y'dk_z'I^f(k_x',k_y',k_z')S^f(k_x-k_x',k_y-k_y',k_z)H^f(k_x,k_y,k_z-k_z')$$

$$(3)$$

Durch die Dirac-Kamm-Funktion (https://en.wikipedia.org/wiki/Dirac_comb) kann ein diskretes äquidistantes Sampling in z-Richtung dargestellt werden:

$$IS_{em}(x, y, z) = \sum_{k=-\infty}^{+\infty} I_{em}(x, y, z)\delta(z - k\Delta z)$$

(4),

wobei $\Delta z$ das Sampling-Intervall in z-Richtung angibt. Der Summationsindex k läuft dabei in einer konkreten Berechnung über alle axialen Probenebenen, für die ein Ergebnisbild ermittelt werden soll, also über einen endlichen Bereich von Ganzzahlen anstelle der hier der Vollständigkeit halber angegebenen unendlichen Reihen.

Eine Fouriertransformation der Gleichung (4) bezüglich x, y and z ergibt:

$$IS_{em}^{f}\left(k_x, k_y, k_z\right) = \sum_{k=-\infty}^{+\infty} I_{em}^{f}\left(k_x, k_y, k_z - \frac{k}{\Delta z}\right)$$

(5)

Die Fouriertransformierte des Dirac-Kamms der Periode $\Delta z$ ist dabei wiederum ein Dirac-Kamm, jedoch mit der Periode $1/\Delta z$. Der Summationsindex k darf darin jedoch nicht mit den Komponenten $k_x$, $k_y$, $k_z$ des Wellenvektors im Frequenzraum verwechselt werden.

Einsetzen der Gleichung (3) in die Gleichung (5) ergibt ein allgemeingültiges Gleichungssystem, mittels dessen jedes beliebige fouriertransformierte Beleuchtungsmuster $I^{f}\left(k_x', k_y', k_z'\right)$ entmischt werden kann:

$$IS_{em}^{f}\left(k_x, k_y, k_z\right) =$$

$$\sum_{k=-\infty}^{+\infty} \int dk_x' dk_y' dk_z' I^{f}\left(k_x', k_y', k_z'\right) S^{f}\left(k_x - k_x', k_y - k_y', k_z - \frac{k}{\Delta z}\right) H^{f}\left(k_x, k_y, k_z - \frac{k}{\Delta z} - k_z'\right)$$

(6)

Wie oben ist die unendliche Reihe in einer konkreten Berechnung durch eine endliche Summe über die zu berechnenden Probenebenen zu ersetzen.

Anhand des konkret verwendeten Beleuchtungsmusters $I(x, y, z)$ in unterschiedlichen Beleuchtungs-Phasen, genauer gesagt anhand seiner Fouriertransformierten $I^{f}(k_x, k_y, k_z)$, der Detektions-PSF $H(x, y, z)$ des Mikroskops, genauer gesagt anhand ihrer Fouriertransformierten $Hf(x, y, z)$ - also der OTF - und der aufgenommenen Einzelbilder 40 bzw. $IS_{em}(x, y, z)$, genauer gesagt anhand der Fouriertransformierten $IS_{em}^{f}\left(k_x, k_y, k_z\right)$ der aufgenommenen Einzelbilder 40, kann dieses Gleichungssystem gelöst werden.

Das Lösen des Gleichungssystems bewirkt eine der Trennung der Beleuchtungsordnungen und eine Verschiebung der durch die OTF des Mikroskops an sich nicht übertragbaren Ortsfrequenzanteile, die in den strukuriert beleuchteten Einzelbildern jedoch in frequenzverschobener Form enthalten sind, an ihre ursprünglichen Stellen im Frequenzraum.

Die Lösungen sind die Fouriertransformierten $S^{f}\left(k_x - k_x', k_y - k_y', k_z - \frac{k}{\Delta z}\right)$ der optischen Eigenschaften der Probe. Diese enthalten aufgrund der Wechselwirkung mit dem Muster der Beleuchtungsstrukrur auch höhere Frequenzkomponenten als durch das Mikroskop 1 optisch übertragbar sind. Durch inverse Fouriertransformationen kann daraus für jede aufgenommene Fokalebene ein lateral und/oder axial superaufgelöstes Ergebnisbild errechnet werden.

Wenn für jede durch das Gleichungssystem beschriebene Ebene ein Satz 30 von Einzelbildern 40 mit verschiedenen Beleuchtungs-Phasen aufgenommen wird, entspricht das der herkömmlichen 3D-SIM. Das Gleichungssystem ist dabei vollständig bestimmt oder sogar überbestimmt und wird in der Regel für alle beschriebenen Ebenen simultan gelöst. Das Lösen des Gleichungssystems kann in Verbindung mit der anschließenden inversen Fouriertransoformation als Entfaltung angesehen werden, da die Faltung des von der Probe abgestrahlten Lichtes mit der PSF des Mikroskops weitgehend rückgängig gemacht wird.

Es ist jedoch gar nicht notwendig, für jede durch das Gleichungssystem beschriebene Ebene einen Satz 30 von Einzelbildern 40 aufzunehmen, sondern es können eine oder mehrere Ebenen ausgelassen werden. Das Gleichungssystem ist dann zwar scheinbar unterbestimmt und das Rekonstruktionsproblem somit schlecht gestellt (engl. "ill-posed"). Es kann aber näherungsweise dennoch gelöst werden, so dass auch für die ausgelassene(n) Ebene(n) eine Rekonstruktion ihrer optischen Eigenschaften $S(x, y, z)$ und damit eines Ergebnisbildes erfolgen kann. Auch dieses Gleichungssystem wird über mehrere Fokalebenen hinweg simultan gelöst.

Eine näherungsweise Lösung gelingt beispielsweise durch eine lineare Regression im Frequenzraum, insbesondere durch Regularisierung. Im einfachsten Fall kann eine Interpolation erfolgen. Vorzugsweise wird eine abgeschnittene Singulärwertzerlegung (engl. "truncated singular value decomposition") durchgeführt beziehungsweise die Entfaltung erfolgt unter einer SVD-basierten Nebenbedingung.

Ein feineres Sampling quer zur optischen Achse - laterale Überabtastung (engl. "oversampling") - durch entsprechend kleine Detektorpixel erzeugt zusätzliche unabhängige Messwerte, welche eine stabilere Regularisierung ermöglichen. Für normale SIM wäre eine laterale Überabtastung redundant. Mit überabgetasteten zusätzlichen Pixeln kann jedoch Gleichung (6) erweitert werden:

$$IS_{em}^{f}\left(k_x - \frac{i}{\Delta x}, k_y - \frac{j}{\Delta y}, k_z\right) =$$

$$\sum_{k=-\infty}^{+\infty} \int dk_x' dk_y' dk_z' I^f\left(k_x', k_y', k_z'\right) S^f\left(k_x - k_x', k_y - k_y', k_z - \frac{k}{\Delta z}\right)$$
$$\times H^f\left(k_x - \frac{i}{\Delta x}, k_y - \frac{j}{\Delta y}, k_z - \frac{k}{\Delta z} - k_z'\right)$$

$$(7),$$

wobei $i$, $j$ die zusätzlichen Pixel im Frequenzraum bezeichnen und $\Delta x, \Delta y$ die Sampling-Intervalle quer zur optischen Achse angeben. Dadurch wird die Genauigkeit der näherungsweisen Lösung verbessert. Auch einen größere Anzahl von Beleuchtungs-Phasen alternativ oder zusätzlich zur lateralen Überabtastung kann die Genauigkeit der Lösung verbessen. Wie oben ist die unendliche Reihe in einer konkreten Berechnung durch eine endliche Summe über die zu berechnenden Probenebenen zu ersetzen.

In **Fig. 3** sind exemplarisch Fokalebenen $F_1$, $F_2$ und $F_3$ dargestellt, die in der Probe 2 liegen. Der Fokus des Objektivs 3 wird sukzessive auf diese Fokalebenen eingestellt. Für jede Fokalebene wird die Probe 2 beispielsweise mit den in Fig. 2 dargestellten Beleuchtungsphasen strukturiert beleuchtet. In jeder der neun Beleuchtungsphasen wird die momentane Fokalebene beugungsbegrenzt in ein jeweiliges der beispielsweise neun Einzelbilder aufgenommen. Bei drei Fokalebenen liegen anschließend 27 Einzelbilder vor.

Die Fokalebenen $F_1$, $F_2$ und $F_3$ sind weiter voneinander beabstandet als nach dem Nyquist-Kriterium erlaubt. Sie sind dabei gerade soweit voneinander entfernt, dass die Tiefenschärfebereiche der benachbarten Fokalebenen $F_1$ und $F_2$ beziehungsweise $F_2$ und $F_3$ einander noch überlappen. Die Probe weist zwischen den Fokalebenen $F_1$, $F_2$ und $F_3$ ("zusätzliche") Probenebenen $X_1$ und $X_2$ auf, von denen keine fokussierten Einzelbilder aufgenommen werden. Intensitäten aus diesen Ebenen werden lediglich in den Einzelbildern aus den Fokalebenen $F_1$, $F_2$ und $F_3$ außerfokal unscharf detektiert. Die zusätzlichen Probenebenen $X_1$ und $X_2$ sind von ihren benachbarten Fokalebenen so beabstandet, dass die Fokalebenen $F_1$, $F_2$ und $F_3$ zusammen mit den zusätzlichen Probenebenen $X_1$ und $X_2$ das Nyquist-Kriterium erfüllen, beispielsweise sind alle fünf Ebenen äquidistant angeordnet.

Durch näherungsweises Lösen des Gleichungssystems (6) mit den jeweiligen Beleuchtungs-Phasen in den drei Fokalebenen $F_1$, $F_2$ und $F_3$ und den beiden zusätzlichen Probenebenen $X_1$ und $X_2$ können fünf superaufgelöste Ergebnisbilder 50 errechnet werden - für jede Fokalebene und für jede zusätzliche Probenebene jeweils ein Ergebnisbild. Zum näherungsweisen Lösen wird das Gleichungssystem (6) beispielsweise zunächst mittels einer abgeschnittenen Singulärwertzerlegung regularisiert und dann gelöst.

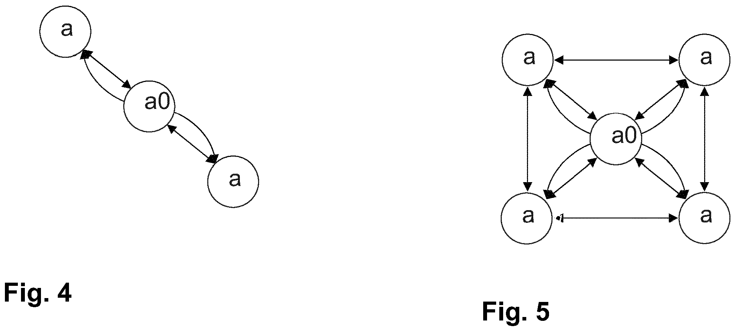

Anhand von **Fig. 4** und **Fig. 5** werden zwei mögliche konkrete Beleuchtungsmuster $I(x, y, z)$ dargestellt. Die in Fig. 4 inder rückwärtigen Brennebene des Objektivs 3 gezeigten drei Strahlen erzeugen in der Probe in der Fokalebene ein Gittermuster paralleler Streifen, das sich axial aufgrund des Talbot-Effektes in weiteren Ebenen wiederholt:

$$I(x,y,z) = a_0^2/2 + a^2 + a^2 \cos\left(2*\hat{k}_x x + 2*\hat{k}_y y + \varphi_{-11}\right)$$

$$+ 2*aa_0 \cos\left(\hat{k}_x x + \hat{k}_y y + \varphi_{01}\right) * \cos\left((\hat{k} - \hat{k}_z)z - \varphi_0\right)$$

$$(8),$$

wobei $\alpha_0$ die Intensität des mittleren Strahls und $\alpha$ die Intensität der anderen Strahlen angibt. $\hat{k}_x, \hat{k}_y$ sind die x- und y-Komponenten des erzeugten Gitters, $\hat{k}_z$ entspricht der Talbot-Frequenz, $\varphi_0$ ist die Phase des Talbotmuster (die Verschiebung des Talbotmusters bezüglich der Fokalebene), und $\varphi_{ij}$ sind die Phasen des erzeugten Gitters quer zur optischen Achse für paarweise Interferenz der unterschiedlichen Strahlen.

Einsetzen in Gleichung (3) ergibt:

$$I_{em}^f\left(k_x, k_y, k_z\right) =$$

$$A_0 \, H^f\left(k_x, k_y, k_z\right) S^f\left(k_x, k_y, k_z\right) +$$

$$A_2 \, H^f\left(k_x, k_y, k_z\right)\{S^f\left(k_x + 2*\hat{k}_x, k_y + 2*\hat{k}_y, k_z\right)e^{-i2\varphi_{-11}}$$

$$+ S^f\left(k_x - 2*\hat{k}_x, k_y - 2*\hat{k}_y, k_z\right)e^{i2\varphi_{-11}}\} +$$

$$A_1\left\{H^f\left(k_x, k_y, k_z + [\hat{k}_z - \hat{k}]\right)e^{i\varphi_0} + H^f\left(k_x, k_y, k_z - [\hat{k}_z - \hat{k}]\right)e^{-i\varphi_0}\right\}S^f\left(k_x + \hat{k}_x, k_y + \hat{k}_y, k_z\right)e^{-i\varphi_{01}} +$$

$$A_1\left\{H^f\left(k_x, k_y, k_z + [\hat{k}_z - \hat{k}]\right)e^{i\varphi_0} + H^f\left(k_x, k_y, k_z - [\hat{k}_z - \hat{k}]\right)e^{-i\varphi_0}\right\}S^f\left(k_x - \hat{k}_x, k_y - \hat{k}_y, k_z\right)e^{i\varphi_{01}}$$

$$(9),$$

worin $A_n$, $n = 0 \ldots 2$ , die entsprechenden Intensitäten der Ordnungen sind. Daraus resultieren im Frequenzraum fünf zu trennende Intensitätskomponenten. Dazu werden fünf Einzelbilder aus fünf verschiedenen Beleuchtungsphasen $\varphi$ benötigt.

Die Gleichungen (6) und (7) erhalten bei diesem Beleuchtungsmuster die folgenden Formen (wie oben ist die unendliche Reihe in einer konkreten Berechnung durch eine endliche Summe über die zu berechnenden Probenebenen zu ersetzen):

$$IS_{em}^f\left(k_x, k_y, k_z\right) =$$

$$A_0 \sum_{k=-\infty}^{\infty} H^f\left(k_x, k_y, k_z - \frac{k}{\Delta z}\right) S^f\left(k_x, k_y, k_z - \frac{k}{\Delta z}\right) +$$

$$e^{-i2\varphi_{-11}} A_2 \sum_{k=-\infty}^{\infty} H^f\left(k_x, k_y, k_z - \frac{k}{\Delta z}\right) S^f\left(k_x + 2*\hat{k}_x, k_y + 2*\hat{k}_y, k_z - \frac{k}{\Delta z}\right) +$$

$$e^{i2\varphi_{-11}} A_2 \sum_{k=-\infty}^{\infty} H^f\left(k_x, k_y, k_z - \frac{k}{\Delta z}\right) S^f\left(k_x - 2*\hat{k}_x, k_y - 2*\hat{k}_y, k_z - \frac{k}{\Delta z}\right) +$$

$$e^{-i\varphi_{01}} e^{i\varphi_0} A_1 \sum_{k=-\infty}^{\infty} H^f\left(k_x, k_y, k_z + [\hat{k}_z - \hat{k}] - \frac{k}{\Delta z}\right) S^f\left(k_x + \hat{k}_x, k_y + \hat{k}_y, k_z - \frac{k}{\Delta z}\right) +$$

$$e^{-i\varphi_{01}} e^{-i\varphi_0} A_1 \sum_{k=-\infty}^{\infty} H^f\left(k_x, k_y, k_z - [\hat{k}_z - \hat{k}] - \frac{k}{\Delta z}\right) S^f\left(k_x + \hat{k}_x, k_y + \hat{k}_y, k_z - \frac{k}{\Delta z}\right) +$$

$$e^{i\varphi_{01}} e^{i\varphi_0} A_1 \sum_{k=-\infty}^{\infty} H^f\left(k_x, k_y, k_z + [\hat{k}_z - \hat{k}] - \frac{k}{\Delta z}\right) S^f\left(k_x - \hat{k}_x, k_y - \hat{k}_y, k_z - \frac{k}{\Delta z}\right) +$$

$$e^{i\varphi_{01}} e^{-i\varphi_0} A_1 \sum_{k=-\infty}^{\infty} H^f\left(k_x, k_y, k_z - [\hat{k}_z - \hat{k}] - \frac{k}{\Delta z}\right) S^f\left(k_x - \hat{k}_x, k_y - \hat{k}_y, k_z - \frac{k}{\Delta z}\right)$$

$$(10)$$

$$IS_{em}^f\left(k_x - \frac{i}{\Delta x}, k_y - \frac{j}{\Delta y}, k_z\right) =$$

$$A_0 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x, k_y, k_z - \frac{k}{\Delta z}\right) +$$

$$e^{-i2\varphi_{-11}} A_2 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x + 2*\hat{k}_x, k_y + 2*\hat{k}_y, k_z - \frac{k}{\Delta z}\right) +$$

$$e^{i2\varphi_{-11}} A_2 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x - 2*\hat{k}_x, k_y - 2*\hat{k}_y, k_z - \frac{k}{\Delta z}\right) +$$

$$e^{-i\varphi_{01}}e^{i\varphi_0}A_1 \sum_{k=-\infty}^{\infty} H^f\left(k_x - \frac{i}{\Delta x}, k_y - \frac{j}{\Delta y}, k_z + [\hat{k}_z - \hat{k}] - \frac{k}{\Delta z}\right)S^f\left(k_x + \hat{k}_x, k_y + \hat{k}_y, k_z - \frac{k}{\Delta z}\right) +$$

$$e^{-i\varphi_{01}}e^{-i\varphi_0}A_1 \sum_{k=-\infty}^{\infty} H^f\left(k_x - \frac{i}{\Delta x}, k_y - \frac{j}{\Delta y}, k_z - [\hat{k}_z - \hat{k}] - \frac{k}{\Delta z}\right)S^f\left(k_x + \hat{k}_x, k_y + \hat{k}_y, k_z - \frac{k}{\Delta z}\right)$$

$$+$$

$$e^{i\varphi_{01}}e^{i\varphi_0}A_1 \sum_{k=-\infty}^{\infty} H^f\left(k_x - \frac{i}{\Delta x}, k_y - \frac{j}{\Delta y}, k_z + [\hat{k}_z - \hat{k}] - \frac{k}{\Delta z}\right)S^f\left(k_x - \hat{k}_x, k_y - \hat{k}_y, k_z - \frac{k}{\Delta z}\right) +$$

$$e^{i\varphi_{01}}e^{-i\varphi_0}A_1 \sum_{k=-\infty}^{\infty} H^f\left(k_x - \frac{i}{\Delta x}, k_y - \frac{j}{\Delta y}, k_z - [\hat{k}_z - \hat{k}] - \frac{k}{\Delta z}\right)S^f\left(k_x - \hat{k}_x, k_y - \hat{k}_y, k_z - \frac{k}{\Delta z}\right)$$

$$(11)$$

Die in Fig. 5 inder rückwärtigen Brennebene des Objektivs 3 gezeigten fünf Strahlen erzeugen in der Probe in der Fokalebene ein zweidimensionale Gittermuster, das sich axial aufgrund des Talbot-Effektes in weiteren Ebenen wiederholt:

$$I(\text{x}, \text{y}, z) = a_0^2/2 + 2*a^2 + 2*a^2\cos\left(2*\hat{k}_y y + \varphi_{21}\right) + 2*aa_0\cos\left(\hat{k}_x x + \hat{k}_y y + \varphi_{20}\right)*$$

$$\cos\left((\hat{k} - \hat{k}_z)z - \varphi_0\right) + 2*a^2\cos\left(2*\hat{k}_x x + \varphi_{-21}\right) + a^2\cos\left(2*\hat{k}_x x + 2*\hat{k}_y y + \varphi_{-22}\right) +$$

$$2*aa_0\cos\left(\hat{k}_x x - \hat{k}_y y + \varphi_{10}\right)*\cos\left((\hat{k} - \hat{k}_z)z - \varphi_0\right) + a^2\cos\left(2*\hat{k}_x x - 2*\hat{k}_y y + \varphi_{-11}\right)$$

$$(12)$$

Die Größen haben dieselbe Bedeutung wie in Gleichung (8).
Einsetzen in Gleichung (3) ergibt:

$$I_{em}^f\left(k_x, k_y, k_z\right) =$$

$$A_0\, H^f\left(k_x, k_y, k_z\right)S^f\left(k_x, k_y, k_z\right) +$$

$$A_1 H^f\left(k_x, k_y, k_z\right)\begin{Bmatrix} S^f\left(k_x, k_y + 2*\hat{k}_y, k_z\right)e^{-i2\varphi_{21}} + \\ S^f\left(k_x, k_y - 2*\hat{k}_y, k_z\right)e^{i2\varphi_{21}} \end{Bmatrix} +$$

$$A_2\{H^f\left(k_x, k_y, k_z + [\hat{k}_z - \hat{k}]\right)e^{i\varphi_0} + H^f\left(k_x, k_y, k_z - [\hat{k}_z - \hat{k}]\right)e^{-i\varphi_0}\}S^f\left(k_x + \hat{k}_x, k_y + \hat{k}_y, k_z\right)e^{-i\varphi_{20}} +$$

$$A_2\{H^f\left(k_x, k_y, k_z + [\hat{k}_z - \hat{k}]\right)e^{i\varphi_0} + H^f\left(k_x, k_y, k_z - [\hat{k}_z - \hat{k}]\right)e^{-i\varphi_0}\}S^f\left(k_x - \hat{k}_x, k_y - \hat{k}_y, k_z\right)e^{i\varphi_{20}} +$$

$$A_3 H^f\left(k_x, k_y, k_z\right)\begin{Bmatrix} S^f\left(k_x + 2*\hat{k}_x, k_y, k_z\right)e^{-i2\varphi_{-21}} + \\ S^f\left(k_x - 2*\hat{k}_x, k_y, k_z\right)e^{i2\varphi_{-21}} \end{Bmatrix} +$$

$$A_4 H^f\big(k_x, k_y, k_z\big)\big\{S^f\big(k_x + 2*\hat{k}_x, k_y + 2*\hat{k}_y, k_z\big)e^{-i2\varphi_{-22}}$$

$$+ S^f\big(k_x - 2*\hat{k}_x, k_y - 2*\hat{k}_y, k_z\big)e^{i2\varphi_{-22}}\big\} +$$

$$A_5\big\{H^f\big(k_x, k_y, k_z + [\hat{k}_z - \hat{k}]\big)e^{i\varphi_0} + H^f\big(k_x, k_y, k_z - [\hat{k}_z - \hat{k}]\big)e^{-i\varphi_0}\big\}S^f\big(k_x + \hat{k}_x, k_y - \hat{k}_y, k_z\big)e^{-i\varphi_{10}} +$$

$$A_5\big\{H^f\big(k_x, k_y, k_z + [\hat{k}_z - \hat{k}]\big)e^{i\varphi_0} + H^f\big(k_x, k_y, k_z - [\hat{k}_z - \hat{k}]\big)e^{-i\varphi_0}\big\}S^f\big(k_x - \hat{k}_x, k_y + \hat{k}_y, k_z\big)e^{i\varphi_{10}} +$$

$$A_6 H^f\big(k_x, k_y, k_z\big)\big\{S^f\big(k_x + 2*\hat{k}_x, k_y - 2*\hat{k}_y, k_z\big)e^{-i2\varphi_{-11}}$$

$$+ S^f\big(k_x - 2*\hat{k}_x, k_y + 2*\hat{k}_y, k_z\big)e^{i2\varphi_{-11}}\big\}$$

$$(13)$$

worin $A_n$, $n = 0 \dots 6$, die entsprechenden Intensitäten der Ordnungen sind. Daraus resultieren im Frequenzraum dreizehn zu trennende Intensitätskomponenten. Dazu werden dreizehn Einzelbilder aus dreizehn verschiedenen Beleuchtungs-phasen $\varphi$ benötigt.

Die Gleichungen (6) und (7) erhalten bei diesem Beleuchtungsmuster die folgenden Formen (wie oben ist die unendliche Reihe in einer konkreten Berechnung durch eine endliche Summe über die zu berechnenden Probenebenen zu ersetzen):

$$IS_{em}^f\big(k_x, k_y, k_z\big) =$$

$$A_0 \sum_{k=-\infty}^{\infty} H^f\left(k_x, k_y, k_z - \frac{k}{\Delta z}\right) S^f\left(k_x, k_y, k_z - \frac{k}{\Delta z}\right) +$$

$$e^{-i2\varphi_{21}} A_1 \sum_{k=-\infty}^{\infty} H^f\left(k_x, k_y, k_z - \frac{k}{\Delta z}\right) S^f\left(k_x, k_y + 2*\hat{k}_y, k_z - \frac{k}{\Delta z}\right) +$$

$$e^{i2\varphi_{21}} A_1 \sum_{k=-\infty}^{\infty} H^f\left(k_x, k_y, k_z - \frac{k}{\Delta z}\right) S^f\left(k_x, k_y - 2*\hat{k}_y, k_z - \frac{k}{\Delta z}\right) +$$

$$e^{-i\varphi_{20}} e^{i\varphi_0} A_2 \sum_{k=-\infty}^{\infty} H^f\left(k_x, k_y, k_z + [\hat{k}_z - \hat{k}] - \frac{k}{\Delta z}\right) S^f\left(k_x + \hat{k}_x, k_y + \hat{k}_y, k_z - \frac{k}{\Delta z}\right) +$$

$$e^{-i\varphi_{20}} e^{-i\varphi_0} A_2 \sum_{k=-\infty}^{\infty} H^f\left(k_x, k_y, k_z - [\hat{k}_z - \hat{k}] - \frac{k}{\Delta z}\right) S^f\left(k_x + \hat{k}_x, k_y + \hat{k}_y, k_z - \frac{k}{\Delta z}\right) +$$

$$e^{i\varphi_{20}} e^{i\varphi_0} A_2 \sum_{k=-\infty}^{\infty} H^f\left(k_x, k_y, k_z + [\hat{k}_z - \hat{k}] - \frac{k}{\Delta z}\right) S^f\left(k_x - \hat{k}_x, k_y - \hat{k}_y, k_z - \frac{k}{\Delta z}\right) +$$

$$e^{i\varphi_{20}} e^{-i\varphi_0} A_2 \sum_{k=-\infty}^{\infty} H^f\left(k_x, k_y, k_z - [\hat{k}_z - \hat{k}] - \frac{k}{\Delta z}\right) S^f\left(k_x - \hat{k}_x, k_y - \hat{k}_y, k_z - \frac{k}{\Delta z}\right) +$$

$$e^{-i2\varphi_{-21}}A_3 \sum_{k=-\infty}^{\infty} H^f\left(k_x, k_y, k_z - \frac{k}{\Delta z}\right) S^f\left(k_x + 2 * \hat{k}_x, k_y, k_z - \frac{k}{\Delta z}\right) +$$

$$e^{i2\varphi_{-21}}A_3 \sum_{k=-\infty}^{\infty} H^f\left(k_x, k_y, k_z - \frac{k}{\Delta z}\right) S^f\left(k_x - 2 * \hat{k}_x, k_y, k_z - \frac{k}{\Delta z}\right) +$$

$$e^{-i2\varphi_{-22}}A_4 \sum_{k=-\infty}^{\infty} H^f\left(k_x, k_y, k_z - \frac{k}{\Delta z}\right) S^f\left(k_x + 2 * \hat{k}_x, k_y + 2 * \hat{k}_y, k_z - \frac{k}{\Delta z}\right) +$$

$$e^{i2\varphi_{-22}}A_4 \sum_{k=-\infty}^{\infty} H^f\left(k_x, k_y, k_z - \frac{k}{\Delta z}\right) S^f\left(k_x - 2 * \hat{k}_x, k_y - 2 * \hat{k}_y, k_z - \frac{k}{\Delta z}\right) +$$

$$e^{-i\varphi_{10}}e^{i\varphi_0}A_5 \sum_{k=-\infty}^{\infty} H^f\left(k_x, k_y, k_z + [\hat{k}_z - \hat{k}] - \frac{k}{\Delta z}\right) S^f\left(k_x + \hat{k}_x, k_y - \hat{k}_y, k_z - \frac{k}{\Delta z}\right) +$$

$$e^{-i\varphi_{10}}e^{-i\varphi_0}A_5 \sum_{k=-\infty}^{\infty} H^f\left(k_x, k_y, k_z - [\hat{k}_z - \hat{k}] - \frac{k}{\Delta z}\right) S^f\left(k_x + \hat{k}_x, k_y - \hat{k}_y, k_z - \frac{k}{\Delta z}\right) +$$

$$e^{i\varphi_{10}}e^{i\varphi_0}A_5 \sum_{k=-\infty}^{\infty} H^f\left(k_x, k_y, k_z + [\hat{k}_z - \hat{k}] - \frac{k}{\Delta z}\right) S^f\left(k_x - \hat{k}_x, k_y + \hat{k}_y, k_z - \frac{k}{\Delta z}\right) +$$

$$e^{i\varphi_{10}}e^{-i\varphi_0}A_5 \sum_{k=-\infty}^{\infty} H^f\left(k_x, k_y, k_z - [\hat{k}_z - \hat{k}] - \frac{k}{\Delta z}\right) S^f\left(k_x - \hat{k}_x, k_y + \hat{k}_y, k_z - \frac{k}{\Delta z}\right) +$$

$$e^{-i2\varphi_{-11}}A_6 \sum_{k=-\infty}^{\infty} H^f\left(k_x, k_y, k_z - \frac{k}{\Delta z}\right) S^f\left(k_x + 2 * \hat{k}_x, k_y - 2 * \hat{k}_y, k_z - \frac{k}{\Delta z}\right) +$$

$$e^{i2\varphi_{-11}}A_6 \sum_{k=-\infty}^{\infty} H^f\left(k_x, k_y, k_z - \frac{k}{\Delta z}\right) S^f\left(k_x - 2 * \hat{k}_x, k_y + 2 * \hat{k}_y, k_z - \frac{k}{\Delta z}\right)$$

$$(14)$$

$$IS_{em}^f\left(k_x - \frac{i}{\Delta x}, k_y - \frac{j}{\Delta y}, k_z\right) =$$

$$A_0 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x, k_y, k_z - \frac{k}{\Delta z}\right) +$$

$$e^{-i2\varphi_{21}}A_1 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x, k_y + 2 * \hat{k}_y, k_z - \frac{k}{\Delta z}\right) +$$

$$e^{i2\varphi_{21}}A_1 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x, k_y - 2 * \hat{k}_y, k_z - \frac{k}{\Delta z}\right) +$$

$$e^{-i\varphi_{20}}e^{i\varphi_0}A_2 \sum_{k=-\infty}^{\infty} H^f\left(k_x - \frac{i}{\Delta x}, k_y - \frac{j}{\Delta y}, k_z + [\hat{k}_z - \hat{k}] - \frac{k}{\Delta z}\right) S^f\left(k_x + \hat{k}_x, k_y + \hat{k}_y, k_z - \frac{k}{\Delta z}\right) +$$

$$e^{-i\varphi_{20}}e^{-i\varphi_0}A_2 \sum_{k=-\infty}^{\infty} H^f\left(k_x - \frac{i}{\Delta x}, k_y - \frac{j}{\Delta y}, k_z - [\hat{k}_z - \hat{k}] - \frac{k}{\Delta z}\right) S^f\left(k_x + \hat{k}_x, k_y + \hat{k}_y, k_z - \frac{k}{\Delta z}\right) +$$

$$e^{i\varphi_{20}}e^{i\varphi_0}A_2 \sum_{k=-\infty}^{\infty} H^f\left(k_x - \frac{i}{\Delta x}, k_y - \frac{j}{\Delta y}, k_z + [\hat{k}_z - \hat{k}] - \frac{k}{\Delta z}\right) S^f\left(k_x - \hat{k}_x, k_y - \hat{k}_y, k_z - \frac{k}{\Delta z}\right) +$$

$$e^{i\varphi_{20}}e^{-i\varphi_0}A_2 \sum_{k=-\infty}^{\infty} H^f\left(k_x - \frac{i}{\Delta x}, k_y - \frac{j}{\Delta y}, k_z - [\hat{k}_z - \hat{k}] - \frac{k}{\Delta z}\right) S^f\left(k_x - \hat{k}_x, k_y - \hat{k}_y, k_z - \frac{k}{\Delta z}\right) +$$

$$e^{-i2\varphi_{-21}}A_3 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x + 2*\hat{k}_x, k_y, k_z - \frac{k}{\Delta z}\right) +$$

$$e^{i2\varphi_{-21}}A_3 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x - 2*\hat{k}_x, k_y, k_z - \frac{k}{\Delta z}\right) +$$

$$e^{-i2\varphi_{-22}}A_4 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x + 2*\hat{k}_x, k_y + 2*\hat{k}_y, k_z - \frac{k}{\Delta z}\right) +$$

$$e^{i2\varphi_{-22}}A_4 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x - 2*\hat{k}_x, k_y - 2*\hat{k}_y, k_z - \frac{k}{\Delta z}\right) +$$

$$e^{-i\varphi_{10}}e^{i\varphi_0}A_5 \sum_{k=-\infty}^{\infty} H^f\left(k_x - \frac{i}{\Delta x}, k_y - \frac{j}{\Delta y}, k_z + [\hat{k}_z - \hat{k}] - \frac{k}{\Delta z}\right) S^f\left(k_x + \hat{k}_x, k_y - \hat{k}_y, k_z - \frac{k}{\Delta z}\right) +$$

$$e^{-i\varphi_{10}}e^{-i\varphi_0}A_5 \sum_{k=-\infty}^{\infty} H^f\left(k_x - \frac{i}{\Delta x}, k_y - \frac{j}{\Delta y}, k_z - [\hat{k}_z - \hat{k}] - \frac{k}{\Delta z}\right) S^f\left(k_x + \hat{k}_x, k_y - \hat{k}_y, k_z - \frac{k}{\Delta z}\right) +$$

$$e^{i\varphi_{10}}e^{i\varphi_0}A_5 \sum_{k=-\infty}^{\infty} H^f\left(k_x - \frac{i}{\Delta x}, k_y - \frac{j}{\Delta y}, k_z + [\hat{k}_z - \hat{k}] - \frac{k}{\Delta z}\right) S^f\left(k_x - \hat{k}_x, k_y + \hat{k}_y, k_z\right.$$

$$\left. - \frac{k}{\Delta z}\right) +$$

$$e^{i\varphi_{10}}e^{-i\varphi_0}A_5 \sum_{k=-\infty}^{\infty} H^f\left(k_x - \frac{i}{\Delta x}, k_y - \frac{j}{\Delta y}, k_z - [\hat{k}_z - \hat{k}] - \frac{k}{\Delta z}\right) S^f\left(k_x - \hat{k}_x, k_y + \hat{k}_y, k_z\right.$$

$$\left. - \frac{k}{\Delta z}\right) +$$

$$e^{-i2\varphi_{-11}}A_6 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x + 2*\hat{k}_x, k_y - 2*\hat{k}_y, k_z - \frac{k}{\Delta z}\right) +$$

$$e^{i2\varphi_{-11}}A_6 \sum_{k=-\infty}^{\infty} H^f\left(k_x - \frac{i}{\Delta x}, k_y - \frac{j}{\Delta y}, k_z - \frac{k}{\Delta z}\right) S^f\left(k_x - 2*\hat{k}_x, k_y + 2*\hat{k}_y, k_z - \frac{k}{\Delta z}\right)$$

$$(15)$$

Bezugszeichenliste

| | |
|---|---|
| 1 | Mikroskop |
| 2 | Probe |
| 3 | Objektiv |
| 4 | Strahlteiler |
| 5 | Tubuslinse |
| 6 | CCD-Detektor |
| 7 | Lichtmikroskopmodul |
| 8 | Weitfeld-Detektionsstrahlengang |
| 9 | Laser-Scanning-Modul |
| 11 | Schaltspiegel |
| 12 | Strahlteilermodul |
| 13 | Emissionsfilter |
| 14 | Lichtleitfaser |
| 15 | Lasermodul |
| 16 | Sammel-Beleuchtungsstrahlengang |
| 17 | Weitfeldbeleuchtungsmodul |
| 18 | Schaltspiegel 18 |
| 19 | TIRF-Beleuchtungsmodul |
| 20 | Lichtleitfaser |
| 21 | Spiegel |
| 22 | Manipulatormodul |
| 23 | Gitter |
| 24 | Verschiebeantrieb |
| 25 | Bildfeldrotator |
| 26 | Rotatorantrieb |
| 27 | Tubuslinse |
| 28 | Steuereinrichtung |
| 30 | Einzelbildersatz |
| 40 | Einzelbild |
| 41 | Beleuchtungsstruktur |

50    Ergebnisbild
F$_i$    Fokalebenen
X$_i$    zusätzlichen Probenebenen

**Patentansprüche**

1.  Verfahren zur Abbildung einer Probe mittels eines Mikroskops (1), wobei mittels des Mikroskops (1) eine Fokalebene der Probe (2) fokussiert wird und diese Fokalebene in mehreren Phasen sequentiell mit strukturiertem Beleuchtungslicht (41) beleuchtet und das von der Probe (2) emittierte und/oder gestreute Probenlicht pro Phase mittels eines Detektors (6) in ein jeweiliges Einzelbild (40) aufgenommen wird, so dass aus den Einzelbildern (40) ein Ergebnisbild (50) mit erhöhter Auflösung rekonstruierbar ist,

    wobei mittels des Mikroskops (1) eine zweite, von der ersten Fokalebene verschiedene Fokalebene fokussiert wird und auch für diese zweite Fokalebene Einzelbilder (40) in unterschiedlichen Beleuchtungs-Phasen aufgenommen werden,
    **dadurch gekennzeichnet,**
    **dass** aus den Einzelbildern (40) der zwei Fokalebenen ein Ergebnisbild (50) rekonstruiert wird, welches eine zwischen diesen Fokalebenen liegende Probenebene darstellt,
    **dass** der Abstand der beiden Fokalebenen, zwischen denen sich die zusätzliche Probenebene befindet, kleiner ist als die minimale durch das Mikroskop optisch auflösbare axiale Distanz und größer ist als Hälfte dieser minimal auflösbaren axialen Distanz und
    **dass** zur Rekonstruktion des Ergebnisbilds (50) mindestens eine Lösung eines Gleichungssystems näherungsweise ermittelt wird, welches die Wechselwirkung der Lichtstruktur mit optischen Eigenschaften der Probe und mit der Punktbildfunktion des Mikroskops sowohl in den Fokalebenen als auch in der Probenebene, die zwischen den Fokalebenen liegt, beschreibt..

2.  Verfahren nach Anspruch 1, wobei das folgende oder ein mathematisch äquivalentes Gleichungssystems verwendet wird:

$$IS_{em}^{f}\left(k_{x}, k_{y}, k_{z}\right) =$$

$$\sum_{k} \int dk'_{x} dk'_{y} dk'_{z} I^{f}\left(k'_{x}, k'_{y}, k'_{z}\right) S^{f}\left(k_{x} - k'_{x}, k_{y} - k'_{y}, k_{z} - \frac{k}{\Delta z}\right) H^{f}\left(k_{x}, k_{y}, k_{z} - \frac{k}{\Delta z} - k'_{z}\right)$$

    mit:

    $k_x, k_y, k_z$ Komponenten des Wellenvektors im Frequenzraum;
    $IS_{em}^{f}$ Fouriertransformierte eines diskreten äquidistanten Dirac-Samplings in z-Richtung von der mit dem Produkt des Beleuchtungsmusters *I* und der optischen Eigenschaften *S* der Probe gefalteten Detektions-PSF *H* des Mikroskops;
    *I$^f$* Fouriertransformierte des Beleuchtungsmusters *I*;
    *S$^f$* Fouriertransformierte der optischen Eigenschaften *S* der Probe;
    *H$^f$* Fouriertransformierte der Detektions-PSF *H* des Mikroskops.

3.  Verfahren nach Anspruch 1 oder 2, wobei zum näherungsweisen Lösen eine lineare Regression verwendet wird.

4.  Verfahren nach einem der Ansprüche 1 bis 3, wobei zum näherungsweisen Lösen eine Regularisierung verwendet wird.

5.  Verfahren nach einem der Ansprüche 1 bis 4, wobei zum näherungsweisen Lösen eine abgeschnittene Singulärwertzerlegung verwendet wird, in welcher nur eine echte Untermenge aller Singulärwerte ermittelt wird.

6.  Verfahren nach einem der vorhergehenden Ansprüche, wobei die Einzelbilder lateral optisch überabgetastet aufgenommen werden.

**7.** Verfahren nach dem vorhergehenden Anspruch, wobei mindestens eine Lösung des folgenden oder eines mathematisch äquivalenten Gleichungssystems ermittelt wird:

$$IS_{em}^{f}\left(k_x - \frac{i}{\Delta x}, k_y - \frac{j}{\Delta y}, k_z\right) =$$

$$\sum_k \int dk'_x dk'_y dk'_z I^f\left(k'_x, k'_y, k'_z\right) S^f\left(k_x - k'_x, k_y - k'_y, k_z - \frac{k}{\Delta z}\right)$$
$$\times H^f\left(k_x - \frac{i}{\Delta x}, k_y - \frac{j}{\Delta y}, k_z - \frac{k}{\Delta z} - k'_z\right)$$

mit:

$k_x$, $k_y$, $k_z$ Komponenten des Wellenvektors im Frequenzraum;

$IS_{em}^{f}$ Fouriertransformierte eines diskreten äquidistanten Dirac-Samplings in z-Richtung von der mit dem Produkt des Beleuchtungsmusters $I$ und der optischen Eigenschaften $S$ der Probe gefalteten Detektions-PSF $H$ des Mikroskops;

$I^f$ Fouriertransformierte des Beleuchtungsmusters $I$;

$S^f$ Fouriertransformierte der optischen Eigenschaften $S$ der Probe;

$H^f$ Fouriertransformierte der Detektions-PSF $H$ des Mikroskops.

**8.** Verfahren nach einem der vorhergehenden Ansprüche, wobei die in der Probe erzeugte Lichtstruktur mit lateraler Periodizität und/oder axialer Periodizität regelmäßig strukturiert ist und in jeder der Beleuchtungs-Phasen an einer andere Position und/oder in einer anderen Orientierung angeordnet wird.

**9.** Verfahren nach einem der vorhergehenden Ansprüche, wobei das Ergebnisbild (50), welches die zwischen den Fokalebenen liegende Probenebene darstellt, mit gegenüber den Einzelbildern erhöhter Auflösung rekonstruiert wird.

**10.** Verfahren nach einem der vorhergehenden Ansprüche, wobei die Einzelbilder oder das Ergebnisbild anhand eines Modells einer Punktbildfunktion des Mikroskops näherungsweise entfaltet werden, insbesondere nach einem rechnerischen Trennen der Beleuchtungs-Phasen.

**11.** Verfahren nach Anspruch 8, wobei bei dem Entfalten ein (Intensitäts-)Anteil eines der Einzelbilder oder genau eines Pixels, unterschiedlichen Ergebnisbildern zugeordnet wird.

**12.** Verfahren nach Anspruch 9, wobei bei dem Entfalten ein (Intensitäts-)Anteil eines der Einzelbilder oder genau eines Pixels, teilweise mindestens einem der Ergebnisbilder, welches eine der Fokalebenen darstellt, und teilweise dem Ergebnisbild, welches die zwischen den Fokalebenen liegende Probenebene darstellt, zugeordnet wird.

**13.** Verfahren nach Anspruch 9 oder 10, wobei das Zuordnen zu dem Ergebnisbild, welches die zwischen den Fokalebenen liegende Probenebene darstellt, anhand von Intensitäten von Einzelbildern mindestens der beiden nächstliegenden Fokalebenen erfolgt.

**14.** Verfahren nach einem der vorhergehenden Ansprüche, wobei zur Aufnahme der Einzelbilder ein zweidimensional ortsauflösender Detektor verwendet wird und keine die Probe optisch schneidende Blende vor dem Detektor angeordnet wird.

**15.** Verfahren nach einem der vorhergehenden Ansprüche, wobei die Punktbildfunktion des Mikroskops nicht zum Erzeugen einer axialen Asymmetrie manipuliert wird.

**16.** Verfahren nach einem der vorhergehenden Ansprüche, wobei während der Aufnahme jedes der Einzelbilder nur genau eine Fokalebene mittels des Mikroskops fokussiert wird.

**17.** Mikroskop (1) mit einer Steuereinheit (28), eingerichtet zur Durchführung eines Verfahrens nach einem der vorhergehenden Ansprüche, sowie mit einer Lichtquelle, Mitteln zum Fokussieren unterschiedlicher Fokalebenen in einer Probe (2), einem zweidimensional ortsauflösenden Detektor (6) zur Aufnahme von Einzelbildern (40) von der momentanen Fokalebene und Mitteln zur Erzeugung von strukturiertem Beleuchtungslicht (41) in der Probe (2).

**18.** Mikroskop nach Anspruch 17,

> **dadurch gekennzeichnet,**
> **dass** keine die Probe (2) optisch schneidende Blende vor dem Detektor (6) angeordnet ist und/oder
> **dass** keine Mittel zur Manipulation der Punktbildfunktion des Mikroskops zum Erzeugen einer axialen Asymmetrie vorhanden sind.

**Claims**

**1.** Method for imaging a sample with a microscope (1),

> wherein a focal plane of the sample (2) is being focused with the microscope (1) and this focal plane is being sequentially illuminated in a plurality of phases with structured illumination light (41) and sample light emitted and/or scattered by the sample (2) is being recorded with a detector (6) for each phase into a corresponding single image (40) in such a way that from the single images (40) a resulting image (50) with an increased resolution can be reconstructed,
> wherein a second focal plane which is different from the first focal plane is being focused with the microscope (1) and single images (40) are being recorded in different illumination phases for the this second focal plane as well,
> **characterized in**
> **that** from the single images (40) of the two focal planes a resulting image (50) is being reconstructed which represents a sample plane being situated between these focal planes,
> **that** the spacing of the two focal planes between which the additional sample plane is situated is smaller than the smallest axial spacing which can be resolved by the microscope and larger than half of this smallest resolvable axial spacing and
> **that** for the reconstruction of the resulting image (50) at least one solution of a set of equations is being approximatively determined which describes the interaction of the light structure with optical properties of the sample and with the point spread function of the microscope both in the focal planes and in the sample plane being situated between the focal planes.

**2.** Method according to claim 1, wherein the following set of equations or a set of equations which is mathematically equivalent therewith is being used:

$$IS_{em}^{f}\left(k_x, k_y, k_z\right) =$$

$$\sum_k \int dk_x' dk_y' dk_z' I^f\left(k_x', k_y', k_z'\right) S^f\left(k_x - k_x', k_y - k_y', k_z - \frac{k}{\Delta z}\right) H^f\left(k_x, k_y, k_z - \frac{k}{\Delta z} - k_z'\right)$$

wherein:

> $k_x, k_y, k_z$ components of the wave vector in the frequency space;
>
> $IS_{em}^{f}$ Fourier transformation of a discrete equidistant Dirac-Sampling in the z-direction of the detection-PSF $H$ of the microscope convoluted with the product of the illumination pattern $I$ and the optical properties $S$ of the sample;
> $I^f$ Fourier transformation of the illumination pattern $I$;
> $S^f$ Fourier transformation of the optical properties $S$ of the sample;
> $H^f$ Fourier transformation of the detection-PSF $H$ of the microscope.

**3.** Method according to claim 1 or 2, wherein a linear regression is being used for the approximative solution.

**4.** Method according to one of the claims 1 to 3, wherein a regularization is being used for the approximative solution.

**5.** Method according to one of the claims 1 to 4, wherein a cut off singular value decomposition, in which only a real subset of all singular values is being determined, is being used for the approximative solution

**6.** Method according to one of the preceding claims, wherein single images a being recorded laterally oversampled.

**7.** Method according to the preceding claim, wherein at least a solution of the following set or equations or a set of equations which is mathematically equivalent therewith is being determined:

$$IS_{em}^f \left( k_x - \frac{i}{\Delta x}, k_y - \frac{j}{\Delta y}, k_z \right) =$$

$$\sum_k \int dk_x' dk_y' dk_z' I^f \left( k_x', k_y', k_z' \right) S^f \left( k_x - k_x', k_y - k_y', k_z - \frac{k}{\Delta z} \right)$$
$$\times H^f \left( k_x - \frac{i}{\Delta x}, k_y - \frac{j}{\Delta y}, k_z - \frac{k}{\Delta z} - k_z' \right)$$

wherein:

$k_x$, $k_y$, $k_z$ components of the wave vector in the frequency space;

$IS_{em}^f$ Fourier transformation of a discrete equidistant Dirac-Sampling in the z-direction of the detection-PSF $H$ of the microscope convoluted with the product of the illumination pattern $I$ and the optical properties $S$ of the sample;

$I^f$ Fourier transformation of the illumination pattern $I$;

$S^f$ Fourier transformation of the optical properties $S$ of the sample;

$H^f$ Fourier transformation of the detection-PSF $H$ of the microscope.

**8.** Method according to one of the preceding claims, wherein the light structure generated in the sample is regularly structured with a lateral periodicity and/or an axial periodicity and is being arranged at a different position and/or a different orientation in each of the illumination phases.

**9.** Method according to one of the preceding claims, wherein the resulting image (50) representing the sample plane being situated between the focal planes is being reconstructed with a higher resolution as compared to the single images.

**10.** Method according to one of the preceding claims, wherein the single images or the single image are being deconvoluted approximatively on the basis of a model of a point spread function of the microscope, in particular after an arithmetic separation of the imaging phases.

**11.** Method according to claim 8, wherein, with the deconvolution, an (intensity) portion of one of the single images or of exactly one pixel is being attributed to different resulting images.

**12.** Method according to claim 9, wherein, with the deconvolution, an (intensity) portion of one of the single images or of exactly one pixel is being attributed partially to at least one of the resulting images representing one of the focal planes and partially to the resulting image representing the sample plane being situated between the focal planes.

**13.** Method according to claim 9 or 10, wherein the attribution to the resulting image representing the sample plane being situated between the focal planes is being done on the basis of intensities at least of the single images of the two closest focal planes.

**14.** Method according to one of the preceding claims, wherein, for recording of the single images, a two-dimensionally spatially resolving detector is being used and no aperture stop optically intersecting the sample is arranged in front of the detector.

**15.** Method according to one of the preceding claims, wherein the point spread function of the microscope is not being manipulated for the generation of an axial asymmetry.

**16.** Method according to one of the preceding claims, wherein, during the recording of each of the single images, only exactly one focal plane is being focused with the microscope.

**17.** Microscope (1) having a control unit (28) being configured for the implementation of the method according to one of the preceding claims and having

a light source,
means for focusing different focal planes in a sample (2),
a two-dimensionally spatially resolving detector (6) for recording of single images (40) of the momentary focal plane and
means for generating of structured illumination light (41) in the sample (2).

**18.** Microscope according to claim 17,

**characterized in**
**that** no aperture stop which optically intersects the sample (2) is arranged in front of the detector (6) and/or
**that** no means for manipulating the point spread function of the microscope for generating an axial asymmetry is present.

**Revendications**

**1.** Procédé d'imagerie d'un échantillon au moyen d'un microscope (1), dans lequel un plan focal de l'échantillon (2) est focalisé au moyen du microscope (1) et ce plan focal est éclairé séquentiellement en plusieurs phases avec une lumière d'éclairage (41) structurée et la lumière d'échantillon émise et/ou diffusée par l'échantillon (2) par phase est capturée dans une image individualisée (40) respective au moyen d'un détecteur (6), de sorte qu'à partir des images individualisées (40) une image résultante (50) avec une résolution accrue puisse être reconstruite,

dans lequel un second plan focal différent du premier plan focal est focalisé au moyen du microscope (1) et des images individualisées (40) sont également capturées pour ce second plan focal dans des phases d'éclairage différentes,
**caractérisé en ce que**
une image résultante (50) est reconstruite à partir des images individualisées (40) des deux plans focaux, laquelle représente un plan d'échantillon situé entre ces plans focaux,
l'espacement entre les deux plans focaux, entre lesquels se trouve le plan d'échantillon supplémentaire, est inférieur à la distance axiale minimale qui peut être optiquement résolue par le microscope et supérieur à la moitié de cette distance axiale minimale qui peut être résolue et
au moins une solution d'un système d'équations est déterminée de manière rapprochée pour la reconstruction de l'image résultante (50), lequel décrit l'interaction de la structure lumineuse avec des propriétés optiques de l'échantillon et avec la fonction d'image ponctuelle du microscope tant dans les plans focaux que dans le plan d'échantillon qui se situe entre les plans focaux.

**2.** Procédé selon la revendication 1, dans lequel est utilisé le système d'équations suivant ou un système d'équations mathématiquement équivalent :

$$IS_{em}^{f}(k_x, k_y, k_z) =$$

$$\sum_k \int dk_x' dk_y' dk_z' I^f(k_x', k_y', k_z') S^f\left(k_x - k_x', k_y - k_y', k_z - \frac{k}{\Delta z}\right) H^f\left(k_x, k_y, k_z - \frac{k}{\Delta z} - k_z'\right)$$

avec :

$k_x$, $k_y$, $k_z$ composantes du vecteur d'onde dans l'espace fréquentiel ;

$IS_{em}^{f}$ transformée de Fourier d'un échantillonnage Dirac équidistant discret dans la direction z de la PSF de détection *H* du microscope, déployée avec le produit du motif d'éclairage *I* et des propriétés optiques *S* de l'échantillon ;

$I^{f}$ transformée de Fourier du motif d'éclairage *I* ;

$S^{f}$ transformée de Fourier des propriétés optiques S de l'échantillon ;

$H^{f}$ transformée de Fourier de la PSF de détection *H* du microscope.

3. Procédé selon la revendication 1 ou 2, dans lequel une régression linéaire est utilisée pour obtenir la solution de manière rapprochée.

4. Procédé selon l'une des revendications 1 à 3, dans lequel une régularisation est utilisée pour obtenir la solution de manière rapprochée.

5. Procédé selon l'une des revendications 1 à 4, dans lequel pour obtenir la solution de manière rapprochée est utilisée une décomposition de valeurs singulières découpée, dans laquelle est uniquement déterminé un véritable sous-ensemble de toutes les valeurs singulières.

6. Procédé selon l'une des revendications précédentes, dans lequel les images individualisées sont capturées de façons suréchantillonnée, latérale et optique.

7. Procédé selon la revendication précédente, dans lequel est déterminée au moins une solution du système d'équations suivant ou d'un système d'équations mathématiquement équivalent :

$$IS_{em}^{f}\left(k_x - \frac{i}{\Delta x}, k_y - \frac{j}{\Delta y}, k_z\right) = \sum_k \int dk'_x dk'_y dk'_z I^{f}\left(k'_x, k'_y, k'_z\right) S^{f}\left(k_x - k'_x, k_y - k'_y, k_z - \frac{k}{\Delta z}\right) \times H^{f}\left(k_x - \frac{i}{\Delta x}, k_y - \frac{j}{\Delta y}, k_z - \frac{k}{\Delta z} - k'_z\right)$$

avec :

$k_x$, $k_y$, $k_z$ composantes du vecteurs d'onde dans l'espace fréquentiel ;

$IS_{em}^{f}$ transformée de Fourier d'un échantillonnage Dirac équidistant discret dans la direction z de la PSF de détection H du microscope, déployée avec le produit du motif d'éclairage I et des propriétés optiques S de l'échantillon ;

$I^{f}$ transformée de Fourier du motif d'éclairage I ;

$S^{f}$ transformée de Fourier des propriétés optiques S de l'échantillon ;

$H^{f}$ transformée de Fourier de la PSF de détection H du microscope.

8. Procédé selon l'une des revendications précédentes, dans lequel la structure lumineuse produite dans l'échantillon est régulièrement structurée avec une périodicité latérale et/ou une périodicité axiale et est agencée en une autre position et/ou dans une autre orientation dans chacune des phases d'éclairage.

9. Procédé selon l'une des revendications précédentes, dans lequel l'image résultante (50), laquelle représente le plan d'échantillon situé entre les plans focaux, est reconstruite avec une résolution accrue à l'égard des images individualisées.

10. Procédé selon l'une des revendications précédentes, dans lequel les images individualisées ou l'image résultante sont déployées de manière rapprochée à l'aide d'un modèle d'une fonction d'image ponctuelle du microscope, en particulier après une séparation calculée des phases d'éclairage.

11. Procédé selon la revendication 8, dans lequel une proportion (d'intensité) de l'une des images individualisées ou exactement d'un pixel est attribuée à des images résultantes différentes lors du déploiement.

12. Procédé selon la revendication 9, dans lequel, lors du déploiement, une proportion (d'intensité) de l'une des images individualisées ou exactement d'un pixel est partiellement attribuée à au moins une des images résultantes, laquelle représente un des plans focaux, et partiellement à l'image résultante, laquelle représente le plan d'échantillon situé entre les plans focaux.

**13.** Procédé selon la revendication 9 ou 10, dans lequel l'attribution à l'image résultante, laquelle représente le plan d'échantillon situé entre les plans focaux, s'effectue à l'aide d'intensités d'images individualisées au moins des deux plans focaux adjacents.

**14.** Procédé selon l'une des revendications précédentes, dans lequel un détecteur bidimensionnel à résolution locale est utilisé pour la capture des images individualisées et aucun obturateur qui coupe optiquement l'échantillon n'est agencé avant le détecteur.

**15.** Procédé selon l'une des revendications précédentes, dans lequel la fonction d'image ponctuelle du microscope n'est pas manipulée pour produire une asymétrie axiale.

**16.** Procédé selon l'une des revendications précédentes, dans lequel seul exactement un plan focal est focalisé au moyen du microscope pendant la capture de chacune des images individualisées.

**17.** Microscope (1) avec une unité de commande (28), aménagé pour réaliser un procédé selon l'une des revendications précédentes, ainsi qu'avec une source lumineuse, des moyens pour focaliser différents plans focaux dans un échantillon (2), un détecteur (6) bidimensionnel à résolution locale pour la capture d'images individualisées (40) du plan focal momentané et des moyens pour produire une lumière d'éclairage (41) structurée dans l'échantillon (2).

**18.** Microscope selon la revendication 17,

**caractérisé en ce que**
aucun obturateur qui coupe optiquement l'échantillon (2) n'est agencé avant le détecteur (6) et/ou
aucun moyen n'est présent pour la manipulation de la fonction d'image ponctuelle du microscope afin de produire une asymétrie axiale.

**Fig. 1**

**Fig. 2**

**Fig. 3**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19908883 A1
- WO 2012118436 A1
- US 2012194646 A1
- US 20080088920 A

**In der Beschreibung aufgeführte Nicht-Patentliteratur**

- **M. GUSTAFSSON.** Surpassing the lateral resolution limit by a factor of two using structured illumination microscopy. *Journal of Microscopy,* 2000, vol. 198, 82
- **VON C. MÜLLER ; J. ENDERLEIN.** Image scanning microscopy. *Physical Review Letters,* 2010, vol. 104, 198101